# FASCICULE DE BREVET EUROPEEN

(11) **EP 2 230 158 B1**
(45) Date de publication et mention de la délivrance du brevet: **16.11.2016**
(21) Numéro de dépôt: 10155411.1
(22) Date de dépôt: 04.03.2010
(51) Int. Cl.: B62D 25/08, B62D 25/04

(54) **Caisse de véhicule automobile**
Kraftfahrzeugkarosserie
Motor vehicle body

(30) Priorité: 17.03.2009 FR 0951689
(43) Date de publication de la demande: 22.09.2010
(73) Titulaire: Peugeot Citroën Automobiles SA, 78140 Vélizy-Villacoublay (FR)
(72) Inventeur: Zozzoli, Gilles, 90100 Lebetain (FR)

(56) Documents cités:
- EP-A1- 0 900 716
- EP-A1- 1 886 902
- EP-A2- 0 146 716
- EP-A2- 1 084 937
- DE-A1- 19 519 354
- JP-A- 2005 126 018
- US-A- 6 139 093

## Description

L'invention concerne une caisse de véhicule automobile.

Une caisse classique comporte deux encadrements de porte latérale avant, chaque encadrement étant délimité par un pied milieu, un pied avant, un montant de baie, un arc de pavillon et un longeron de soubassement. La partie avant de la caisse est équipée de renforts avant latéraux présentant une structure creuse apte à se déformer de manière à absorber une partie de l'énergie d'un éventuel choc frontal. La déformabilité et la résistance de chacun des éléments de la caisse peuvent être ajustées par l'ajout de renforts additionnels et le dimensionnement de ces derniers.

Lors d'un choc frontal, les efforts nés de celui-ci sont transmis de la partie avant aux montants de baie, aux longerons de soubassement et aux pieds milieu, par l'intermédiaire des portes.

On s'intéressera plus particulièrement à la transmission des efforts de la partie avant au pied avant, puis du pied avant à la porte, puis enfin de la porte au pied milieu. Cette transmission est réalisée le long d'un chemin ou de voies d'effort définies par le trajet des efforts dans la caisse.

Dans les caisses de l'art antérieur, les renforts avant latéraux sont fixés sur des éléments intermédiaires de la caisse, eux-mêmes fixés aux renforts de pieds avant. On remarque ainsi que la transmission des efforts des renforts avant aux renforts de pieds avant est réalisée de manière indirecte, créant une rupture dans la transmission des efforts.

Une telle rupture affecte le comportement de la caisse lors d'un choc.

Le document JP 2005-126018 décrit une caisse de véhicule automobile comportant, de chaque côté de la partie avant de la caisse, un renfort avant fixé à un côté d'habitacle, lui-même fixe par rapport à un renfort de pied avant. Ainsi, de même que précédemment, la transmission des efforts du renfort avant au renfort de pied avant n'est pas réalisée de manière directe, mais par l'intermédiaire du côté d'habitacle.

Le document US 6 139 093 A décrit une caisse de véhicule automobile comportant, de chaque côté de la partie avant de la caisse, un renfort avant fixé en partie avant d'un renfort de pied avant. De même que précédemment, la transmission des efforts du renfort avant vers la porte n'est pas réalisée de manière directe, mais par l'intermédiaire du renfort de pied avant qui, de par sa forme en U ou en Ω, présente un profil creux qui n'est pas adapté pour permettre une bonne transmission des efforts du renfort avant vers les portes.

L'invention vise à remédier à cet inconvénient en proposant une caisse équipée de renforts optimisant la transmission des efforts au sein de la caisse.

A cet effet, l'invention concerne une caisse de véhicule automobile conforme à l'objet de la revendication 1.La liaison directe entre le renfort avant et le renfort de pied avant favorise la transmission des efforts au sein de la caisse.

En outre, le volume disponible du côté intérieur du renfort de pied avant est plus important que celui disponible du côté extérieur de celui-ci. De cette manière, les dimensions du renfort avant peuvent, dans une certaine mesure, être choisies librement en fonction des efforts à transmettre ou des déformations devant être subies par le renfort avant en cas de choc frontal.

Enfin, l'agencement du renfort avant rend celui-ci peu ou pas visible depuis l'extérieur, de sorte que celui-ci ne nuit pas à l'esthétique du véhicule.

Selon une possibilité de l'invention, le renfort de pied avant présente au moins une découpe délimitant au moins un logement, dans lequel est logée, au moins en partie, l'extrémité arrière du renfort avant.

De cette manière, le volume disponible pour loger le renfort avant est encore augmenté.

Avantageusement, l'extrémité arrière du renfort avant est donc séparée de la porte, uniquement par la première aile. Ainsi, en cas de choc frontal, l'extrémité arrière du renfort avant vient en appui contre la première aile du renfort de pied avant. Ce dernier se déforme alors jusqu'à prendre appui contre la porte. Les efforts de compression apparaissant dans le renfort avant et dus au choc frontal sont alors transmis directement au renfort de pied avant, puis ensuite directement à la porte.

Selon une caractéristique de l'invention, la découpe est réalisée au moins dans la seconde aile du renfort de pied avant.

La découpe pourrait éventuellement être réalisée dans chacune des ailes, le renfort avant traversant ainsi complètement le renfort de pied avant. De cette manière, l'extrémité arrière du renfort avant peut prendre directement appui sur le bord avant de la porte, appelé frise de porte.

Selon l'invention, l'extrémité arrière du renfort avant est soudée à la zone arrière du renfort de pied avant.

Selon une possibilité de l'invention, le renfort avant se présente sous la forme d'un profilé en U ou en Ω, comportant une base à partir de laquelle s'étendent deux branches.

Ce type de profilé est facile à réaliser et offre des caractéristiques mécaniques (résistance, déformabilité, ...) adaptées à son utilisation.

L'extrémité arrière du renfort avant comporte une paroi transversale disposée sensiblement parallèlement à la zone arrière du renfort de pied avant.

Selon une variante de réalisation de l'invention, la paroi transversale est venue de matière avec la base et les branches.

Selon une autre variante de réalisation de l'invention, la paroi transversale est fixée sur la base et les branches, par exemple par l'intermédiaire de rabats.

Dans cette variante, l'épaisseur de l'extrémité arrière peut ainsi être choisie indépendamment de celle de la tôle utilisée pour réaliser la base et les branches du renfort avant. Il est alors possible, si nécessaire, d'augmenter ou de réduire cette épaisseur en fonction des besoins.

Avantageusement, la caisse comporte une porte latérale montée dans l'encadrement de porte latérale, ladite porte étant équipée d'au moins un raidisseur présentant une extrémité avant disposée en regard de l'extrémité arrière du renfort latéral.

Cette caractéristique permet d'optimiser la transmission des efforts. En effet, les raidisseurs de la porte, permettant la transmission des efforts du pied avant vers le pied milieu, sont situés sur la ligne d'application des efforts de compression du renfort avant.

De cette manière, les contraintes de cisaillement dans le pied avant sont limitées, la zone d'application des efforts sur le pied avant étant uniquement une zone localisée de celui-ci, située en regard respectivement de l'extrémité arrière du renfort avant et du raidisseur de porte. Les efforts traversent alors cette zone localisée selon une ligne droite, aucun décrochement ou rupture n'apparaissant dans la transmission des efforts.

L'invention concerne également un véhicule automobile, caractérisé en ce qu'il comporte une caisse selon l'invention.

De toute façon, l'invention sera mieux comprise à l'aide de la description qui suit en référence aux dessins schématiques annexés représentant, à titre d'exemples, deux formes de réalisation de cette caisse, et sur lesquels :
- la Figure 1 est une vue de côté et de l'extérieur, de l'avant d'une caisse de véhicule, équipée d'une partie de la tôlerie d'une porte avant ;
- la Figure 2 est une vue agrandie d'une partie de la caisse, équipée d'un renfort avant ;
- la Figure 3 est une vue de la partie précitée, depuis l'intérieur de la caisse ;
- les Figures 4 et 5 sont des vues agrandies de la zone de jonction entre le renfort avant et un renfort de pied avant, selon une variante de réalisation de l'invention.

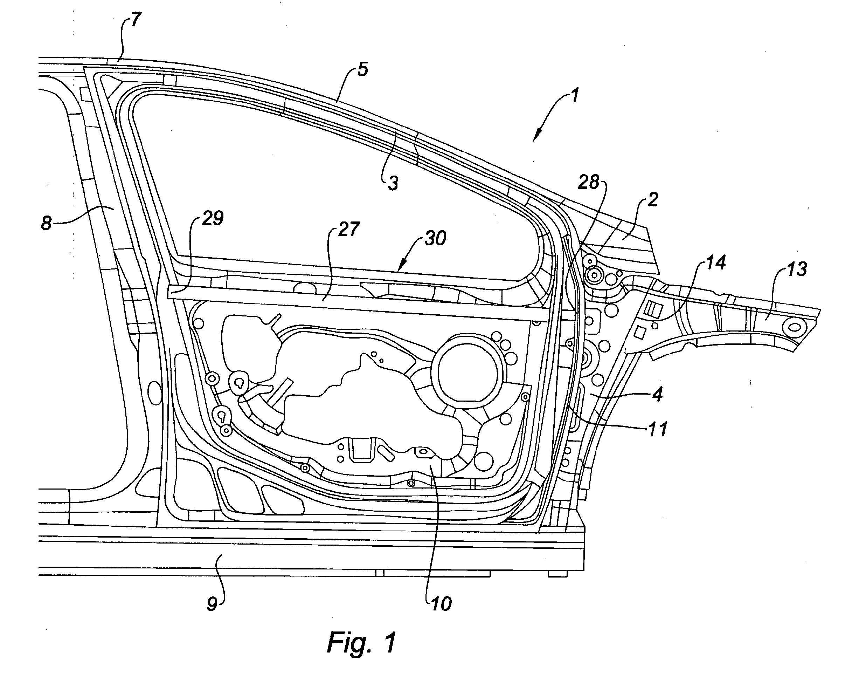

La figure 1 représente une partie de la caisse 1 d'un véhicule automobile, plus particulièrement une partie du côté de la caisse. Dans la description qui suit, seul un premier côté de la caisse 1 est décrit, le second côté étant similaire au premier.

La caisse 1 comporte une tôle latérale de structure appelée côté de caisse ou côté d'habitacle 2 délimitant un encadrement 3 de porte latérale avant. Plus précisément, l'encadrement 3 est délimité par un pied avant 4, un montant de baie 5, un arc de pavillon 7, un pied milieu 8 et un longeron de soubassement 9. Une porte avant 10 est montée dans l'encadrement 3, par l'intermédiaire de charnières (non représentées) interposées entre le pied avant 4 et le bord avant 11 de la porte 10, appelé également frise de porte.

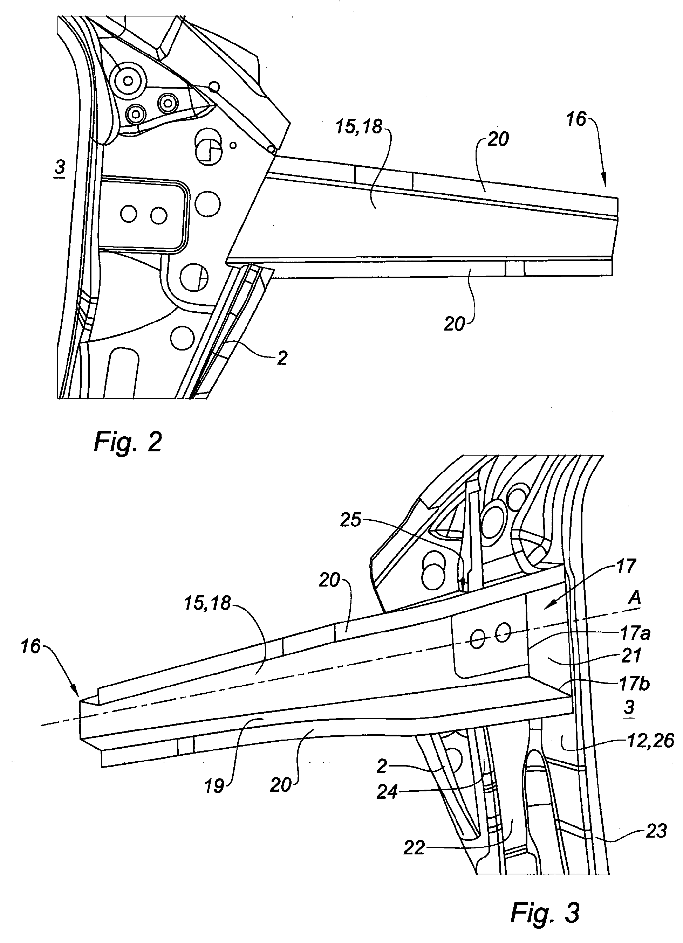

Le pied avant 4 est renforcé par un renfort de pied avant 12, dont la structure est mieux visible aux figures 3 à 5.

Comme cela est connu en soi, l'avant de la caisse 1 comporte une doublure d'aile avant 13 s'étendant latéralement par rapport à l'habitacle et par rapport à un compartiment moteur. La doublure d'aile avant 13 comporte une extrémité arrière 14 fixée au côté d'habitacle 2.

La caisse est équipée en outre d'un renfort avant 15 s'étendant le long de la doublure d'aile 13, entre une extrémité avant 16 et une extrémité arrière 17.

Le renfort avant est visible plus particulièrement aux figures 2 à 5. Sur ces figures, la doublure d'aile 13 n'est pas représentée.

Les figures 2 à 3 illustrent une première forme de réalisation de ce renfort avant 15.

Celui-ci se présente sous la forme d'un élément profilé en forme générale de Ω, s'étendant selon un axe sensiblement horizontal A (figure 3). Le renfort avant 15 comporte une base 18 s'étendant dans un plan sensiblement vertical, chacun des bords supérieur et inférieur de la base 18 présentant une aile 19 s'étendant vers l'intérieur de la caisse 1, perpendiculairement à la base 18. L'extrémité libre de chaque aile 19 est équipé d'un rebord 20 s'étendant sensiblement perpendiculairement à l'aile correspondante 19.

La base 18 présente une forme générale trapézoïdale évasée vers l'arrière 17, de sorte que les ailes 19 s'écartent l'une de l'autre, de l'avant 16 vers l'arrière 17.

Une paroi d'extrémité 21 relie le bord arrière 17a de la base 18 et les bords arrières 17b des ailes 19. Ladite paroi d'extrémité 21, lesdites ailes 19, lesdits rebords 20 et ladite base 18 sont réalisées de manière monobloc, par exemple par emboutissage et/ou par pliage.

Bien entendu, le renfort avant 15 pourrait présenter une forme générale en U et ne pas comporter les rebords 20, ou présenter une forme différente.

Le renfort de pied avant 12 s'étend sensiblement verticalement et présente une forme générale en Ω. Plus particulièrement, le renfort de pied avant 12 comporte une base 22 tournée vers l'extérieur de la caisse, à partir de laquelle s'étendent une première et une seconde ailes 23, 24, disposées respectivement à l'arrière et à l'avant.

La première aile 23 délimite une partie de l'encadrement de porte 3, la seconde aile 24 présentant une découpe 25 permettant le passage de l'extrémité arrière 17 du renfort avant 15.

Plus particulièrement, le renfort avant 15 est inséré dans ladite découpe 25, l'extrémité arrière 17 dudit renfort avant 15 prenant appui contre la face avant 26 de la première aile 23. Ainsi, la paroi d'extrémité 21 est disposée sensiblement parallèlement à la première aile 23 et est plaquée contre la paroi avant 26 de la première aile 23. Le renfort avant 15 et le renfort de pied avant 12 sont soudés au niveau des zones de contact entre ceux-ci, notamment au niveau des première et seconde ailes 23, 24.

De cette manière, le renfort avant 15 est disposé du côté intérieur par rapport au côté d'habitacle 2 et du côté intérieur par rapport au renfort de pied avant 12.

La porte latérale 10 est équipée d'au moins un raidisseur 27 s'étendant sensiblement horizontalement, présentant une extrémité avant 28 située au niveau de la frise de la porte 11, c'est-à-dire au niveau du bord avant de celle-ci, et une extrémité arrière 29 située au niveau du bord arrière de la porte 10, à proximité du pied milieu 8.

Le raidisseur 27 est disposé dans un caisson de porte, au niveau d'une zone médiane de celui-ci, sous un encadrement de fenêtre 30.

L'extrémité avant 28 du raidisseur 27 est située en regard de l'extrémité arrière 17 du renfort avant 15.

De cette manière, lors d'un choc frontal, un effort de compression appliqué sur le renfort avant 15, est transmis par celui-ci de son extrémité avant 16 jusqu'à son extrémité arrière 17. Cette dernière, en appui contre la première aile 23 du renfort de pied avant 12 déforme ce dernier jusqu'à ce que la première aile 23 exerce un effort sur l'extrémité avant 28 du raidisseur 27. L'effort de compression du renfort avant 15 est donc transmis au raidisseur 27 par l'intermédiaire du renfort de pied avant 12, la voie d'efforts s'étendant le long du renfort avant 15 et du raidisseur 27. L'effort ainsi transmis à l'extrémité avant 28 du raidisseur 27 de la porte 10 est ensuite transmis jusqu'au pied milieu 8.

L'ensemble des composants de la caisse 1 sont des éléments déformables, leur déformabilité étant toutefois ajustée afin d'absorber ou de transmettre une partie plus ou moins importante des efforts nés d'un choc frontal.

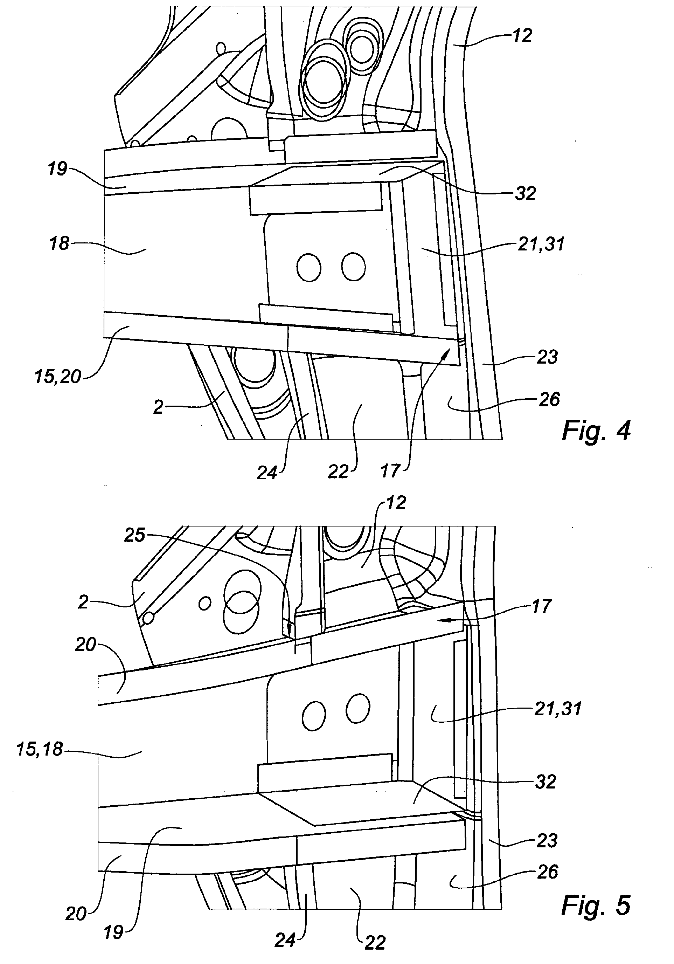

Une autre forme de réalisation est représentée aux figures 4 et 5. Cette forme de réalisation diffère de celle décrite précédemment en ce que la paroi d'extrémité 21 du renfort avant 15 ne vient pas de matière avec les ailes 19 et la base 18. Dans ce cas, la paroi d'extrémité 21 est constituée d'une pièce rapportée et comporte une partie centrale 31, destinée à relier lesdites ailes 19, à partir de laquelle s'étendent respectivement un premier et un second rabats 32, fixés à chacune des ailes 19.

Cette forme de réalisation permet notamment de pouvoir s'affranchir des éventuelles difficultés de réalisation du renfort avant 15 par emboutissage en une seule pièce. En outre, l'épaisseur de la paroi d'extrémité 21 peut être ajustée indépendamment de celle de la base 18 et des ailes 19.

Comme il va de soi l'invention ne se limite pas aux seules formes de réalisation de cette caisse, décrites ci-dessus à titre d'exemples, mais elle embrasse au contraire toutes les variantes.

Ainsi, il peut notamment être envisagé qu'un seul rabat 32 soit présent en complément de la paroi d'extrémité 21, ce rabat pouvant être solidaire d'une aile 19 supérieure ou inférieure.

De même, un troisième rabat peut être disposé de façon sensiblement parallèle à la base 18, ce troisième rabat peut être plaqué contre la base 18 ou disposé à distance de ce dernier dans le prolongement des rebords 20.

## Revendications

1. Caisse (1) de véhicule automobile comportant :
- au moins un pied avant (4) équipé d'un renfort de pied avant (12) présentant une face externe et une face interne, tournée respectivement vers l'extérieur et vers l'intérieur de la caisse (1), une zone arrière (23) tournée, au moins en partie, vers l'avant d'un encadrement (3) de porte latérale (10), et
- au moins un renfort avant (15) présentant une extrémité avant (16) reliée à une zone avant de la caisse (1),
le renfort de pied avant (12) présentant, au moins en partie, une forme générale en U ou en Ω, présentant une base (22) tournée du côté externe, une première aile (23) s'étendant depuis un bord arrière de la base (22) et formant, au moins en partie, la zone arrière dudit renfort de pied avant (12), et une seconde aile (24) s'étendant depuis un bord avant de la base (22) et formant, au moins en partie, une zone avant dudit renfort de pied avant (12), **caractérisée en ce que** le renfort avant (15) présente une extrémité arrière (17) directement soudée sur la zone arrière (23) du renfort de pied avant (12), du côté de la face interne du renfort de pied avant (12).

2. Caisse (1) selon la revendication 1, **caractérisée en ce que** le renfort de pied avant (12) présente au moins une découpe (25) délimitant au moins un logement, dans lequel est logée, au moins en partie, l'extrémité arrière (17) du renfort avant (15).

3. Caisse (1) selon la revendication 2, **caractérisée en ce que** la découpe (25) est réalisée au moins dans la seconde aile (24) du renfort de pied avant (12).

4. Caisse (1) selon l'une des revendications 1 à 3, **caractérisée en ce que** le renfort avant (15) se présente sous la forme d'un profilé en U ou en Ω, comportant une base (18) à partir de laquelle s'étendent deux branches (19).

5. Caisse (1) selon l'une des revendications 1 à 4, **caractérisée en ce que** l'extrémité arrière (17) du renfort avant (15) comporte une paroi transversale (21) disposée sensiblement parallèlement à la zone arrière (23) du renfort de pied avant (12).

6. Caisse (1) selon les revendications 4 et 5, **caractérisée en ce que** la paroi transversale (21) est venue de matière avec la base (18) et les branches (19).

7. Caisse (1) selon les revendications 4 et 5, **caractérisée en ce que** la paroi transversale (21) est fixée sur la base (18) et les branches (19), par exemple par l'intermédiaire de rabats (32).

8. Caisse (1) selon l'une des revendications 1 à 7, **caractérisée en ce qu'**elle comporte une porte latérale (10) montée dans l'encadrement (3) de porte latérale, ladite porte (10) étant équipée d'au moins un raidisseur (27) présentant une extrémité avant (28) disposée en regard de l'extrémité arrière (17) du renfort latéral (15).

9. Véhicule automobile, **caractérisé en ce qu'**il comporte une caisse (1) selon l'une des revendications 1 à 8.

## Patentansprüche

1. Karosserie (1) eines Kraftfahrzeugs, die Folgendes umfasst:
- mindestens einen vorderen Fuß (4), der mit einer Vorderfußverstärkung (12) ausgestattet ist, die eine Außenseite und eine Innenseite, die jeweils zu dem Äußeren und zu dem Inneren der Karosserie (1) gerichtet sind, eine hintere Zone (23), die mindestens zum Teil zur Vorderseite eines Rahmens (3) der Seitentür (10) gerichtet ist, aufweist, und
- mindestens eine vordere Verstärkung (15), die ein vorderes Ende (16) aufweist, das mit einer vorderen Zone der Karosserie (1) verbunden ist,
wobei die Vorderfußverstärkung (12) mindestens zum Teil eine allgemeine U- oder Ω-Form aufweist, die eine Basis (22), die zu der Außenseite gerichtet ist, aufweist, wobei sich ein erster Flügel (23) von einem hinteren Rand der Basis (22) erstreckt und mindestens zum Teil die hintere Zone der Vorderfußverstärkung (12) bildet, und einen zweiten Flügel (24), der sich von einem vorderen Rand der Basis (22) erstreckt und mindestens zum Teil eine vordere Zone der Vorderfußverstärkung (12) bildet,
**dadurch gekennzeichnet, dass** die vordere Verstärkung (15) ein hinteres Ende (17) aufweist, das direkt auf die hintere Zone (23) der Vorderfußverstärkung (12) auf der Seite der Innenseite der Vorderfußverstärkung (12) geschweißt ist.

2. Karosserie (1) nach Anspruch 1, **dadurch gekennzeichnet, dass** die Vorderfußverstärkung (12) mindestens einen Ausschnitt (25) aufweist, der mindestens eine Aufnahme abgrenzt, in der mindestens zum Teil das hintere Ende (17) der vorderen Verstärkung (15) aufgenommen ist.

3. Karosserie (1) nach Anspruch 2, **dadurch gekennzeichnet, dass** der Ausschnitt (25) mindestens in dem zweiten Flügel (24) der Vorderfußverstärkung (12) hergestellt ist.

4. Karosserie (1) nach einem der Ansprüche 1 bis 3, **dadurch gekennzeichnet, dass** die vordere Verstärkung (15) die Form eines Profils in U oder Ω aufweist, das eine Basis (18) umfasst, von der ausgehend sich zwei Schenkel (19) erstrecken.

5. Karosserie (1) nach einem der Ansprüche 1 bis 4, **dadurch gekennzeichnet, dass** das hintere Ende (17) der vorderen Verstärkung (15) eine Querwand (21) umfasst, die im Wesentlichen parallel zu der hinteren Zone (23) der Vorderfußverstärkung (12) angeordnet ist.

6. Karosserie (1) nach den Ansprüchen 4 und 5, **dadurch gekennzeichnet, dass** die Querwand (21) aus einem Stück mit der Basis (18) und den Schenkeln (19) hergestellt ist.

7. Karosserie (1) nach den Ansprüchen 4 und 5, **dadurch gekennzeichnet, dass** die Querwand (21) auf der Basis (18) befestigt ist, und dass die Schenkel (19) zum Beispiel anhand von Klappen (32) befestigt sind.

8. Karosserie (1) nach einem der Ansprüche 1 bis 7, **dadurch gekennzeichnet, dass** sie eine Seitentür (10) umfasst, die in dem Rahmen (3) der Seitentür installiert ist, wobei die Tür (10) mit mindestens einer Versteifung (27), die ein vorderes Ende (28) aufweist, das gegenüber dem hinteren Ende (17) der seitlichen Verstärkung (15) angeordnet ist, ausgestattet ist.

9. Kraftfahrzeug, **dadurch gekennzeichnet, dass** es eine Karosserie (1) nach einem der Ansprüche 1 bis 8 umfasst.

## Claims

1. A motor vehicle body (1) comprising:
- at least a front pillar (4) equipped with a front pillar reinforcement (12) having an external face and an internal face, turned respectively toward the exterior and toward the interior of the body (1), a rear zone (23) turned, at least partially, toward the front of a frame (3) of a side door (10), and
- at least a front reinforcement (15) having a front end (16) connected to a front zone of the body (1),
the front pillar reinforcement (12) having, at least partially, a general U-shape or Ω-shape, having a base (22) turned to the external side, a first wing (23) extending from a rear edge of the base (22) and forming, at least partially, the rear zone of said front pillar reinforcement (12), and a second wing (24) extending from a front edge of the base (22) and forming, at least partially, a front zone of said front pillar reinforcement (12),
**characterized in that** the front reinforcement (15) has a rear end (17) directly welded on the rear zone (23) of the front pillar reinforcement (12), to the side of the internal face of the front pillar reinforcement (12).

2. The body (1) according to claim 1, **characterized in that** the front pillar reinforcement (12) has at least one cut-out (25) delimiting at least one housing, in which there is housed, at least partially, the rear end (17) of the front reinforcement (15).

3. The body (1) according to claim 2, **characterized in that** the cut-out (25) is realized at least in the second wing (24) of the front pillar reinforcement (12).

4. The body (1) according to one of claims 1 to 3, **characterized in that** the front reinforcement (15) is present in the form of a U-shaped or Ω-shaped profile, comprising a base (18) from which two branches (19) extend.

5. The body (1) according to one of claims 1 to 4, **characterized in that** the rear end (17) of the front reinforcement (15) comprises a transverse wall (21) disposed substantially parallel to the rear zone (23) of the front pillar reinforcement (12).

6. The body (1) according to claims 4 and 5, **characterized in that** the transverse wall (21) is formed in one piece with the base (18) and the branches (19).

7. The body (1) according to claims 4 and 5, **characterized in that** the transverse wall (21) is fixed on the base (18) and the branches (19), for example by means of flaps (32).

8. The body (1) according to one of claims 1 to 7, **characterized in that** it comprises a side door (10) mounted in the side door frame (3), said door (10) being equipped with at least one stiffener (27) having a front end (28) disposed opposite the rear end (17) of the lateral reinforcement (15).

9. A motor vehicle, **characterized in that** it comprises a body (1) according to one of claims 1 to 8.
